# EUROPEAN PATENT APPLICATION

(11) **EP 3 872 691 A1**
(43) Date of publication of application: **01.09.2021**
(21) Application number: 19881708.2
(22) Date of filing: 17.09.2019
(51) Int. Cl.: G06K 9/00, G06F 3/0488

(54) **FINGERPRINT RECOGNITION METHOD AND RELATED PRODUCT**

(30) Priority: 06.11.2018 CN 201811315402
(71) Applicant: GUANGDONG OPPO MOBILE TELECOMMUNICATIONS CORP., LTD., Dongguan, Guangdong 523860 (CN)
(72) Inventor: YUAN, Shilin, Dongguan, Guangdong 523860 (CN)
(74) Representative: Manitz Finsterwald Patent- und Rechtsanwaltspartnerschaft mbB
(86) International application number: PCT/CN2019/106242
(87) International publication number: WO 2020/093791

(57) **Abstract**

A method for fingerprint recognition and related products are provided. The method is applicable to an electronic device including a fingerprint recognition module and a display screen which has a fingerprint recognition region. The method includes the following. When a user presses the fingerprint recognition module, a target pressed area of the fingerprint recognition module is determined. When the target pressed area is less than a preset area threshold, the fingerprint recognition module is controlled to operate in a first fingerprint collection mode to obtain a first fingerprint image, where in the first fingerprint collection mode, fingerprint collection is performed based on a first region of a first size. When the target pressed area is greater than the preset area threshold, the fingerprint recognition module is controlled to operate in a second fingerprint collection mode to obtain a second fingerprint image, where in the second fingerprint collection mode, fingerprint collection is performed based on a second region of a second size, and the first size is less than the second size. As such, a corresponding fingerprint collection mode can be selected according to the size of the finger in such a way that the efficiency of fingerprint enrollment is improved.

## Description

### TECHNICAL FIELD

This disclosure relates to the technical field of electronic devices, and particularly to a method for fingerprint recognition and related products.

### BACKGROUND

With wide popularity of electronic devices such as smart phones and tablets, the electronic device can support an increasing number of applications and are becoming more powerful. The electronic device is also becoming diversified and personalized and has already been an indispensable electronic product in users' life.

With the development of fingerprint recognition, it has become an essential function of the electronic device. Currently, it is popular to integrate a fingerprint recognition module under a display screen of the electronic device. However, the electronic device with the fingerprint recognition module may fail to enroll a fingerprint of a small finger (for example, a finger of a child) during fingerprint collection, resulting in a poor user experience.

### SUMMARY

Implementations provide a method for fingerprint recognition and related products, which are applicable for fingers of different users, the efficiency of fingerprint enrollment is improved.

In first aspect, an electronic device is provided. The electronic device includes a fingerprint recognition module, a display screen, and a processing circuit.

The display screen has a fingerprint recognition region and is configured to determine a target pressed area of the fingerprint recognition module when a user presses the fingerprint recognition module.

The processing circuit is coupled with the fingerprint recognition module and the display screen.

The processing circuit is configured to control the fingerprint recognition module to operate in a first fingerprint collection mode to obtain a first fingerprint image, when the target pressed area is less than a preset area threshold, where in the first fingerprint collection mode, fingerprint collection is performed based on a first region of a first size.

The processing circuit is configured to control the fingerprint recognition module to operate in a second fingerprint collection mode to obtain a second fingerprint image, when the target pressed area is greater than the preset area threshold, where in the second fingerprint collection mode, fingerprint collection is performed based on a second region of a second size, and the first size is less than the second size.

In a second aspect, a method for fingerprint recognition is provided. The method is applicable to an electronic device. The electronic device includes a fingerprint recognition module and a display screen which has a fingerprint recognition region. The method includes the following.

A target pressed area of the fingerprint recognition module is determined when a user presses the fingerprint recognition module.

The fingerprint recognition module is controlled to operate in a first fingerprint collection mode to obtain a first fingerprint image, when the target pressed area is less than a preset area threshold, where in the first fingerprint collection mode, fingerprint collection is performed based on a first region of a first size. The fingerprint recognition module is controlled to operate in a second fingerprint collection mode to obtain a second fingerprint image, when the target pressed area is greater than the preset area threshold, where in the second fingerprint collection mode, fingerprint collection is performed based on a second region of a second size, and the first size is less than the second size.

In a third aspect, a device for fingerprint recognition is provided. The device is applicable to an electronic device. The electronic device includes a fingerprint recognition module and a display screen which has a fingerprint recognition region. The device includes a determining unit, a first collecting unit, and a second collecting unit.

The determining unit is configured to determine a target pressed area of the fingerprint recognition module when a user presses the fingerprint recognition module.

The first collecting unit is configured to control the fingerprint recognition module to operate in a first fingerprint collection mode to obtain a first fingerprint image, when the target pressed area is less than a preset area threshold, where in the first fingerprint collection mode, fingerprint collection is performed based on a first region of a first size.

The second collecting unit is configured to control the fingerprint recognition module to operate in a second fingerprint collection mode to obtain a second fingerprint image, when the target pressed area is greater than the preset area threshold, where in the second fingerprint collection mode, fingerprint collection is performed based on a second region of a second size, and the first size is less than the second size.

In a fourth aspect, an electronic device is provided. The electronic device includes a processor, a memory, a communication interface, and one or more programs stored in the memory and executed by the processor. The one or more programs include instructions for performing the method described in the second aspect.

In a fifth aspect, a computer-readable storage medium is provided. The computer-readable storage medium is configured to store computer programs for electronic data interchange (EDI) which, when executed, are operable with a computer to perform some or all operations described in the second aspect.

In a sixth aspect, a computer program product is provided. The computer program product includes a non-transitory computer-readable storage medium that stores computer programs. The computer programs are operable with a computer to execute some or all operations described in the second aspect. The computer program product may be a software installation package.

### BRIEF DESCRIPTION OF THE DRAWINGS

To describe technical solutions in implementations of the present disclosure or the related art more clearly, the following briefly introduces accompanying drawings required for illustrating the implementations or the related art. Apparently, the accompanying drawings in the following description illustrate some implementations of the present disclosure. Those of ordinary skill in the art may also obtain other drawings based on these accompanying drawings without creative efforts.
FIG. 1 is a block diagram illustrating a circuit of an electronic device according to implementations.
FIG. 2 is a schematic diagram illustrating a fingerprint recognition region of an electronic device according to implementations.
FIG. 3 is a schematic diagram illustrating a fingerprint recognition region of an electronic device according to other implementations.
FIG. 4 is a schematic structural diagram illustrating an electronic device according to a first implementation.
FIG. 5 is a schematic cross-sectional view taken along line I-I of FIG. 4.
FIG. 6 is a schematic structural diagram of a fingerprint recognition module in an electronic device according to an implementation.
FIG. 7 is a schematic structural view illustrating an electronic device according to an implementation.
FIG. 8 is a schematic cross-sectional view taken along line II-II of FIG 7.
FIG. 9 is a schematic view of the structure at location III in FIG. 8.
FIG. 10 is a schematic structural view of a fingerprint recognition module in an electronic device according to a second implementation.
FIG. 11 is a schematic structural view of an organic light emitting diode (OLED) display layer in a touch panel according to implementations.
FIG. 12 is a schematic diagram of a circuit architecture of a driving circuit for driving a light emitting unit in an OLED display layer according to implementations.
FIG. 13 is a schematic structural view of a light emitting unit.
FIG. 14 is a schematic structural view of a touch layer.
FIG. 15 is a schematic structural view of an electronic device according to a third implementation.
FIG. 16 is a schematic structural view taken along line IV-IV of FIG. 15.
FIG. 17 is a schematic structural view of a display screen and a fingerprint recognition module of FIG. 16.
FIG. 18 is a schematic structural view of a display screen according to implementations.
FIG. 19 is a schematic flow chart of a method for fingerprint recognition according to an implementation.
FIG. 20 is a schematic diagram of various regions of a display screen according to an implementation.
FIG. 21 is a schematic diagram of fingerprint image collection according to an implementation.
FIG. 22 is a schematic flow chart of a method for fingerprint recognition according to another implementation.
FIG. 23 is a schematic flow chart of a method for fingerprint recognition according to another implementation.
FIG. 24 is a schematic structural diagram of an electronic device according to another implementation.
FIG. 25A is a block diagram of functional units of a device for fingerprint recognition according to an implementation.
FIG. 25B is a block diagram of functional units of a device for fingerprint recognition according to another implementation.

### DETAILED DESCRIPTION

In order to enable those skilled in the art to better understand solutions of the present disclosure, technical solutions in implementations of the present disclosure will be described clearly and completely hereinafter with reference to the accompanying drawings in the implementations of the present disclosure. Apparently, the described implementations are merely some rather than all implementations of the present disclosure. All other implementations obtained by those of ordinary skill in the art based on the implementations of the present disclosure without creative efforts shall fall within the protection scope of the present disclosure.

The terms such as "first" and "second" used in the specification, the claims, and the accompany drawings of the present disclosure are used for distinguishing between different objects rather than describing a particular order. The terms "include", "comprise", and "have" as well as variations thereof are intended to cover non-exclusive inclusion. For example, a process, system, product, or apparatus including a series of steps or units is not limited to the listed steps or units, it can optionally include other operations or units that are not listed; alternatively, other operations or units inherent to the process, product, or device can be included either.

The term "implementation" referred to herein means that a particular feature, structure, or feature described in connection with the implementation may be contained in at least one implementation of the present disclosure. The phrase appearing in various places in the specification does not necessarily refer to the same implementation, nor does it refer an independent or alternative implementation that is mutually exclusive with other implementations. It is expressly and implicitly understood by those skilled in the art that an implementation described herein may be combined with other implementations.

An electronic device involved in the implementations of the present disclosure may include various handheld devices, in-vehicle devices, wearable devices (such as smart watches, smart bracelets, wireless headsets, augmented reality/virtual reality devices, and smart glasses), computing devices that have wireless communication functions or other processing devices connected to the wireless modem, as well as various forms of user equipment (UE), mobile stations (MS), terminal devices, and the like. For the convenience of description, the above-mentioned devices are collectively referred to as an electronic device.

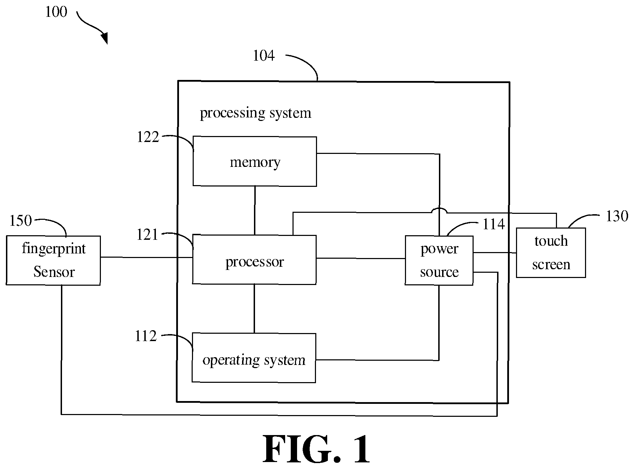

FIG. 1 is a block diagram illustrating a circuit of an electronic device 100 according to implementations. The electronic device 100 includes a processing system 104, a display screen 130, and a fingerprint recognition module 150. The processing system 104 includes one or more processors 121, a memory 122, an operating system 112, and a power source 114. The terms "include", "comprise", and "have" as well as variations thereof are intended to cover non-exclusive inclusion. For example, other components (devices), a series of steps, methods, systems, and the like can also be included. For example, the processing system 104 can include other components in addition to the one or more processors 121, the memory 122, the operating system 112, and the power source 114 mentioned above. The display screen 130 may be a touch screen.

The processor can be implemented based on one or more of microprocessors, microcontrollers, digital signal processors, baseband processors, power management units, audio codec chips, application specific integrated circuits, display driver integrated circuits, and the like.

The one or more processors 121, the memory 122, and the operating system 112 may be directly or indirectly coupled with each other physically, communicatively, and/or operatively. The power source 114 is electrically coupled to the one or more processors 121, the memory 122, and the operating system 112, to provide electrical energy to components connected thereto.

The processor 121 is also referred to as a controller, and the processor 121 is a component of importance in the electronic device 100 for processing instructions, executing operations, controlling timing, processing data, and the like. The function of the processor 121 will be described in detail below, and details are not described herein again.

In an example, the memory 122 includes a temporary memory. The content stored in the temporary memory will not be maintained when the electronic device 100 is turned off. The memory 122 may include hard disk drive memory, non-volatile memory (such as flash memory or other electronic programmable read-only memory used to form solid-state drives, etc.), volatile memory (such as static random access memory (SRAM), dynamic random access memory (DRAM), etc.), and the like, which is not limited herein. In another example, the memory includes volatile memory and non-volatile memory. The volatile memory includes, but is not limited to, a random access memory (RAM), a DRAM, and an SRAM. The non-volatile memory includes, but is not limited to, a magnetic hard disk, a solid state drive (SSD), an optical disk, a floppy disk, a flash memory, or an erasable programmable read only memory (EPROM) or electrically erasable programmable read-only memory (EEPROM) memory. The program codes stored in the memory 122 are callable and executable by the at least one or more processors 121.

The processor 121 may be used to run software of the electronic device 100, such as Internet browsing applications, Voice over Internet Protocol (VOIP) telephone calling applications, email applications, media player applications, operating system functions, and so on. These software can be used to perform some control operations, such as image acquisition based on a camera, ambient light measurement based on an ambient light sensor, proximity sensor measurement based on a proximity sensor, information display function based on a status indicator such as a status indicator of a light-emitting diode, touch event detection based on a touch sensor, functions associated with displaying information on multiple display screens (for example, hierarchical display screens), operations associated with performing wireless communication functions, operations associated with collecting and generating audio signals, control operations associated with collecting and processing button press event data, and other functions in the electronic device 100, which are not limited herein.

The operating system 112 can control the operation of other components of the processing system 104. For example, the operating system 112 facilitates the interaction between one or more processors 121 and the memory 122.

The power source 114 is configured to provide other components (e.g., the processor 121, the memory 122, the fingerprint recognition module 150, etc.) in the electronic device 100 with the electrical energy required for operation. The power source 114 can be, but is not limited to, a one-time power source, or a rechargeable power source. The material of the power source 114 may be, but not limited to, a material such as nickel cadmium, lithium ion or the like.

Further, the electronic device 100 further includes other sensors. For example, the electronic device 100 can include an ambient light sensor, an optical or capacitive proximity sensor, a touch sensor (e.g., based on an optical touch sensor and/or a capacitive touch sensor, where the touch sensor may be a part of a touch display screen or may be used independently as a touch sensor structure), an acceleration sensor, a camera (a front camera or a rear camera), and other sensors.

The display 130 may include one or more of a liquid crystal display, an organic light emitting diode (OLED) display, an electronic ink display, a plasma display, displays based on other display technologies. As an example, the display 130 can include an array of touch sensors (i.e., the display 130 can be a touch display screen). The touch sensor may be a capacitive touch sensor formed by an array of transparent touch sensor electrodes (e.g., indium tin oxide (ITO) electrodes), or may be a touch sensor formed with other touch technologies, such as acoustic touch, pressure sensitive touch, resistance touch, optical touch, and the like, and implementations are not limited thereto.

The electronic device 100 can further include an audio assembly. The audio assembly is configured to provide the electronic device 100 with audio input and output functions. The audio assembly in the electronic device 100 may include speakers, microphones, buzzers, tone generators, and other assemblies for generating and detecting sound.

The electronic device 100 can further include a communication circuit. The communication circuit is configured to provide the electronic device 100 with the ability to communicate with external devices. For instance, the communication circuit includes analog/digital input-output interface circuits and wireless communication circuits based on radio frequency signals and/or optical signals. The wireless communication circuit of the communication circuit may include a radio frequency transceiver circuit, a power amplifier circuit, a low-noise amplifier, a switch, a filter, and an antenna. As an example, the wireless communication circuit of the communication circuit includes a circuit for supporting near field communication (NFC) by transmitting and receiving near field coupled electromagnetic signals. The communication circuit may include an NFC antenna and an NFC transceiver. The communication circuit may further include transceivers and antennas for cellular telephone, transceiver circuits and antennas for wireless local area network, and the like.

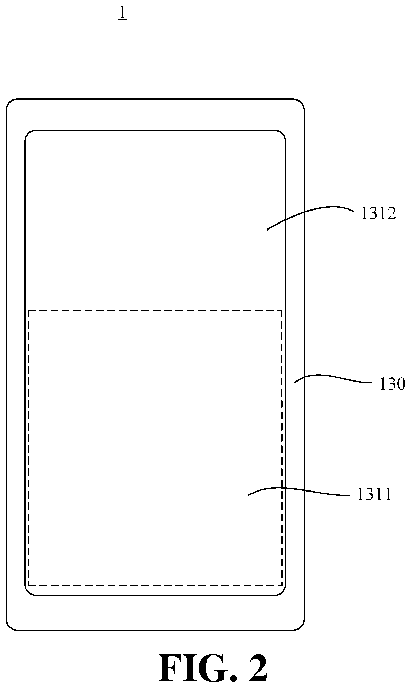

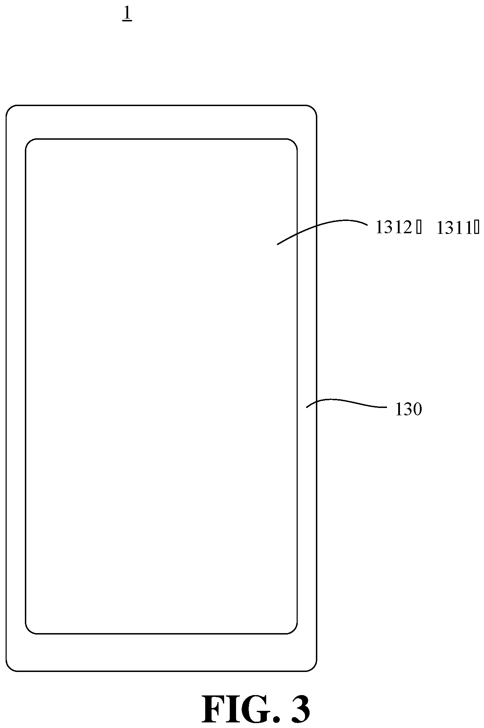

The display screen 130 has a fingerprint recognition region 1311, and the fingerprint recognition region 1311 can be simultaneously pressed by at least two fingers, so that the electronic device 100 has a multi-point fingerprint recognition function or has a full-screen fingerprint recognition function. The fingerprint recognition region 1311 can occupy part or all of the touch area 1312 of the display screen 130. FIG. 2 is a schematic diagram illustrating a fingerprint recognition region of an electronic device according to implementations. In FIG. 2, the fingerprint recognition region 1311 occupies part of the touch area 1312 of the display screen 130. FIG. 3 is a schematic diagram illustrating a fingerprint recognition region of an electronic device according to other implementations. In FIG. 3, the fingerprint recognition region 1311 occupies all of the touch area 1312 of the display screen 130.

The fingerprint recognition module 150 is disposed in a region corresponding to the fingerprint recognition region 1311 and is configured to acquire a fingerprint image. The fingerprint recognition module 150 includes a capacitive fingerprint recognition module, an optical fingerprint recognition module, and an ultrasonic fingerprint recognition module. The fingerprint recognition module can be integrated under the display screen, or the fingerprint recognition module can be integrated into the display screen to collect fingerprint images.

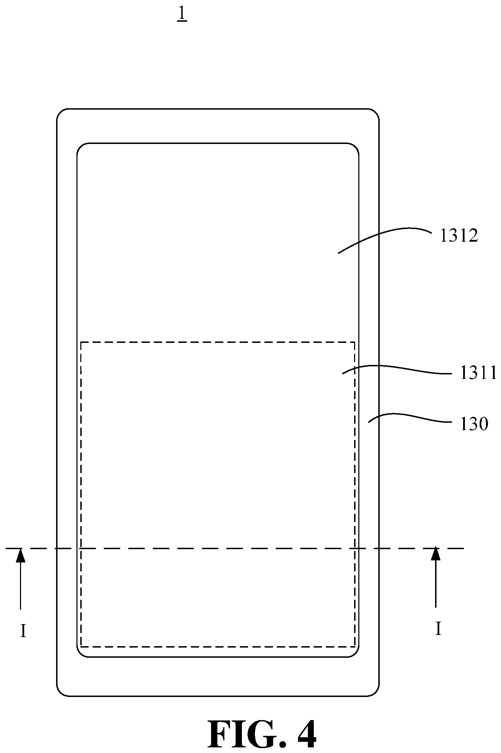

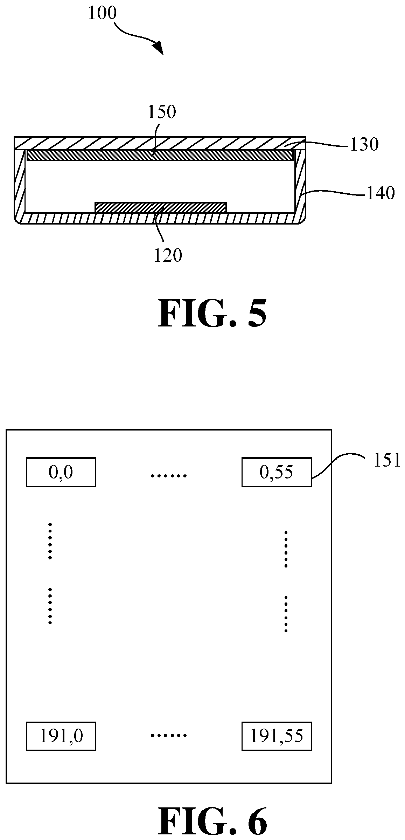

In the case where the fingerprint recognition module 150 includes a capacitive fingerprint recognition module, the working principle of the fingerprint recognition module 150 is described below. FIG. 4 is a schematic structural diagram illustrating an electronic device according to a first implementation. FIG. 5 is a schematic cross-sectional view taken along line I-I of FIG. 4. FIG. 6 is a schematic structural diagram of a fingerprint recognition module in an electronic device according to the first implementation. The electronic device 100 includes a display screen 130. The display screen 130 has a fingerprint recognition region 1311. The fingerprint recognition module 150 is disposed in an area corresponding to the fingerprint recognition region 1311. Other components of the electronic device 100 that are not relevant to the present application are not illustrated. The fingerprint recognition module 150 includes multiple sensing units 151 distributed in array. In the schematic diagram, a case where the fingerprint recognition module 150 includes 56*192=10752 sensing units 151 is illustrated as an example. In this case, a reference numeral of each of the sensing units 151 represents a row and a column of the sensing unit 151. For example, (0, 0) indicates 1st row and 1st column, (0, 55) indicates 1st row and 56th column, (191, 0) indicates 192nd row and the 1st column, and (191, 55) indicates the 192nd row and 56th column. When a finger of a user is placed on the display screen 130, each sensing unit 151 forms a capacitance with the surface of the finger. A fingerprint of the finger includes ridges and valleys, distances between the ridges in the fingerprint of the finger and the sensing units 151 are relatively close, and distances between the valleys in the fingerprint of the finger and the sensing units 151 are relatively far. Therefore, according to a position of each sensing unit 151 in the fingerprint recognition module 150 and magnitude of a capacitance of each sensing unit 151, a rugged three-dimensional surface can be obtained, through which a fingerprint image of the user can be simulated.

Furthermore, the electronic device 100 further includes a housing 140 and a circuit board 120. The housing 140 has a receiving space. The display screen 130 is disposed at an opening of the receiving space. The circuit board 120 is provided with a processor 121 and a memory 122. The circuit board 120 is disposed in the receiving space. The functions of the processor 121 and the memory 122 are described below.

In an example, the fingerprint recognition module 150 is independent of the display screen 130. It can be understood that, in other examples, the fingerprint recognition module 150 can be integrated inside the display screen 130.

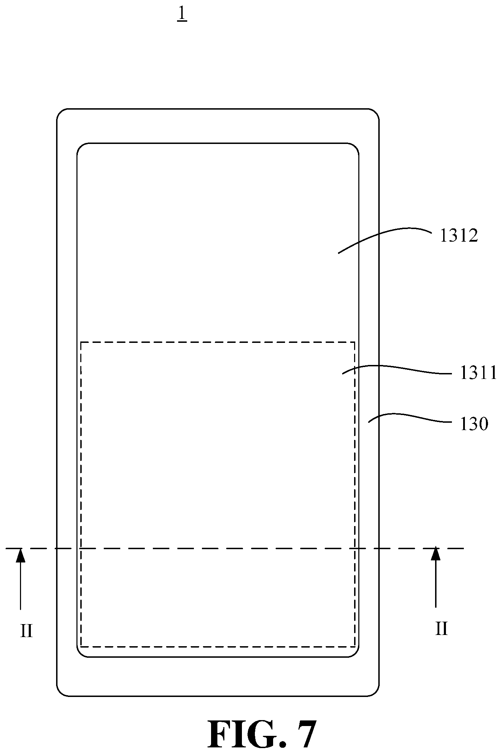

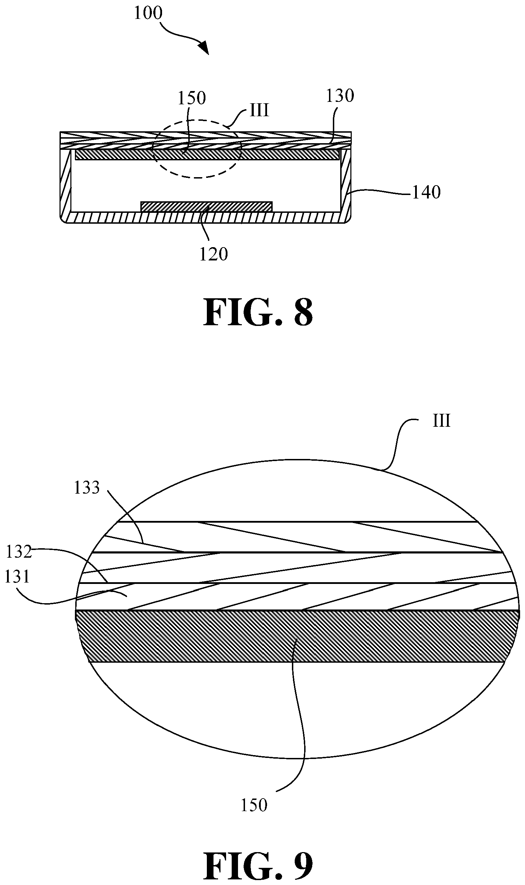

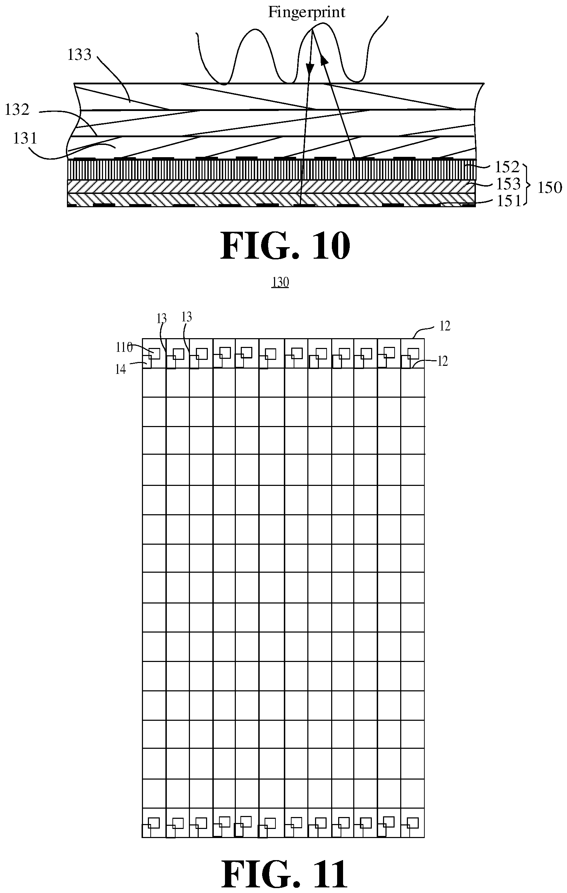

In the case where the fingerprint recognition module 150 includes an optical fingerprint recognition module, the working principle of the fingerprint recognition module 150 is described below. FIG. 7 is a schematic structural view illustrating an electronic device according to a second implementation. FIG. 8 is a schematic cross-sectional view taken along line II-II of FIG 7. FIG. 9 is a schematic view of the structure at location III in FIG. 8. FIG. 10 is a schematic structural view of a fingerprint recognition module in an electronic device according to the second implementation. The display screen 130 has a fingerprint recognition region 1311, and the fingerprint recognition region 1311 can be pressed by at least two fingers, so that the electronic device 100 has a multi-point fingerprint recognition function or has a full-screen fingerprint recognition function. The fingerprint recognition region 1311 can occupy part or all of the touch area 1312 of the display screen 130. The fingerprint recognition module 150 includes multiple sensing units 151 distributed in array.

Furthermore, the electronic device 100 also has a display function. In one example, the display screen 130 is an organic light emitting diode (OLED) display screen, and the display screen 130 includes an OLED display layer 131, a touch layer 132, and a cover plate 133 which are sequentially stacked. In the above example, the fingerprint recognition module 150 is located on a side of the OLED display layer 131 away from the touch layer 132. In other examples, the sensing units 151 in the fingerprint recognition module 150 may also be disposed in the same layer as a layer structure in the OLED display layer 131 to improve the integration degree of the electronic device 100. The specific layer structure in the OLED display layer 131 will be described in detail below.

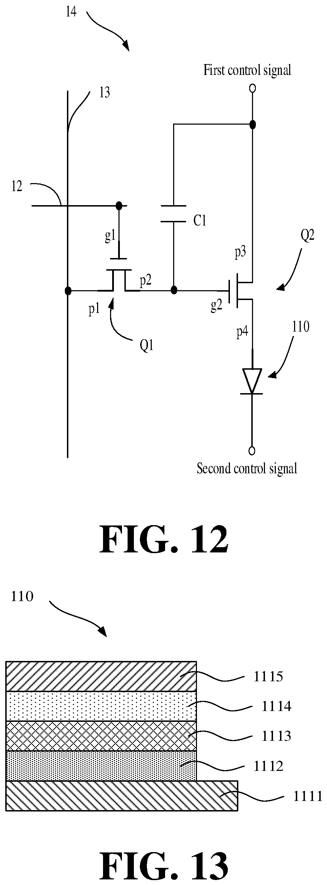

The following describes the structure of the display screen 130. FIG. 11 is a schematic structural view of an OLED display layer in a touch panel according to implementations. FIG. 12 is a schematic diagram of a circuit architecture of a driving circuit for driving a light emitting unit in an OLED display layer according to implementations. The OLED display layer 131 includes scan lines 12, data lines 13, driving circuits 14, and light emitting units 110. In an example, the scan lines 12 are spaced apart, the data lines 13 are spaced apart, and the data lines 13 are cross-insulated with the scan lines 12. The scan line 12 is configured to transmit a scan signal, and the data line 13 is configured to transmit a data signal. Two adjacent data lines 13 and two adjacent scan lines 12 define a sub-pixel area. The sub-pixel area is configured to set the light emitting unit 110 and the driving circuit 14. The driving circuit 14 is configured to drive the light emitting unit 110 to emit light. There is a gap between adjacent light emitting units 110. The sensing unit 151 is disposed in an area corresponding to a gap between adjacent lighting units 110. When the fingerprint is collected, the light emitting unit 110 emits light, the light emitted by the light emitting unit 110 is irradiated onto the finger of the user via the gap, and the light irradiated onto the finger of the user is reflected and received by the sensing unit 151. This example only illustrates the driving circuit 14 and the light emitting unit 110 of the first and last rows.

The structure of the driving circuit 14 and the light emitting unit 110 is described in detail below. In an example, the driving circuit 14 includes a first thin film transistor Q1 and a second thin film transistor Q2. When the first thin film transistor Q1 is turned on under control of a scan signal, and the second thin film transistor Q2 is turned on under control of a data signal, a first control signal is applied to an anode of the light emitting unit 110, and a cathode of the light emitting unit 110 is configured to receive a second control signal. In this example, the first control signal is applied to the anode of the light emitting unit 110, and the second control signal is applied to the cathode of the light emitting unit 110. In this case, the first control signal is at a high level, and the second control signal is at a low level. It can be understood that, in other examples, the first control signal is loaded to the cathode of the light emitting unit 110, and the second control signal is loaded to the anode of the light emitting unit 110. In this case, the first control signal is at a low level, and the second control signal is at a high level. The terms "first", "second", and the like in the specification and claims of the present application and the above drawings are used to distinguish different objects, and are not intended to describe a specific order.

Furthermore, the sub-pixel area is further provided with a first capacitor C1. The first thin film transistor Q1, the second thin film transistor Q2, and the first capacitor C1 constitute the driving circuit that drives the light emitting unit. The first thin film transistor Ql includes a first gate g1, a first end p1, and a second end p2. The second thin film transistor Q2 includes a second gate g2, a third end p3, and a fourth end p4. The first gate g1 is electrically connected to the scan line 12 to receive the scan signal. The first end p1 is electrically connected to the data line 13 to receive the data signal. The second end p2 is electrically connected to the second gate g2. The third end p3 is configured to receive the first control signal. The fourth end p4 is electrically connected to the anode of the light emitting unit 110. The first capacitor C1 has one end electrically connected to the second gate g2. The first capacitor C1 has the other end electrically connected to the third end p3. The first end p1 is a source and the second end p2 is a drain, or the first end p1 is a drain and the second end p2 is a source. The third end p3 is a source and the fourth end p4 is a drain, or the third end p3 is a drain and the fourth end p4 is a source.

In this example, the driving circuit 14 includes the first thin film transistor Q1, the second thin film transistor Q2, and the first capacitor C1. The first thin film transistor Q1 can be an N-type thin film transistor or a P-type thin film transistor. Correspondingly, the second thin film transistor Q2 can be an N-type thin film transistor or a P-type thin film transistor. In this example, the first thin film transistor Q1 and the second thin film transistor Q2 are both N-type thin film transistors. When a gate of the N-type thin film transistor receives a high level signal, a source and a drain of the N-type thin film transistor are turned on. When the gate of the N-type thin film transistor receives a low level signal, the source and the drain of the N-type thin film transistor are turned off. When a gate of the P-type thin film transistor receives a low level signal, a source and a drain of the P-type thin film transistor are turned on. When the gate of the P-type thin film transistor receives a high level signal, the source and the drain of the P-type thin film transistor are turned off. It can be understood that the above is an example structure of the driving circuit 14 for driving the light emitting unit 110. In other examples, the driving circuit 14 can have other structures.

FIG. 13 is a schematic structural view of a light emitting unit. The light emitting unit 110 further includes an anode 1111, a hole injecting and transporting layer 1112, a light emitting material layer 1113, an electron injecting and transporting layer 1114, and a cathode 1115 which are stacked. The anode 1111 is electrically connected to the fourth end p4 of the second thin film transistor Q2, and receives the first control signal when the third end p3 and the fourth end p4 are turned on. The anode 1111 generates holes under control of the first control signal. The second control signal is applied to the cathode 1115. The cathode 1115 provides electrons under control of the second control signal. The holes generated by the anode 1111 are transferred into the light emitting material layer 1113 via the hole injecting and transporting layer 1112. The electrons generated by the cathode 1115 are transferred into the light emitting material layer 1113 via the electron injecting and transporting layer 1114. The holes and the electrons are combined in the light emitting material layer 1113 to emit light. Generally, the first control signal is at a high level and the second control signal is at a low level.

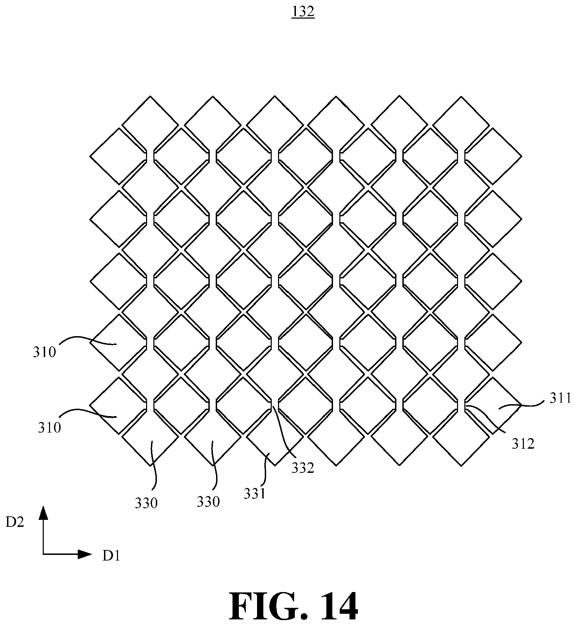

FIG. 14 is a schematic structural view of a touch layer. The touch layer 132 includes multiple first electrode chains 310 and multiple second electrode chains 330. The multiple first electrode chains 310 are spaced apart, and each first electrode chain 310 includes electrically connected multiple first electrodes 311. The multiple second electrode chains 330 are spaced apart. The multiple second electrode chains 330 are cross-insulated with the multiple first electrode chains 310. Each second electrode chain 330 includes electrically connected multiple second electrodes 331. The first electrodes 311 and the second electrodes 331 interact to detect a touch operation of the user and a position of the touch operation.

The first electrode chains 310 extend along a first direction D1 and are arranged at intervals along a second direction D2. The second electrode chains 330 extend along the second direction D2 and are spaced apart along the first direction D1. In an example, the first direction D1 is an X direction, and the second direction D2 is a Y direction. Alternatively, in another example, the first direction D1 is the Y direction, and the second direction D2 is the X direction.

The cover plate 133 is disposed on a side of the touch layer 132 away from the OLED display layer 131. A surface of the cover plate 133 away from the OLED display layer 131 constitutes an outer surface of the electronic device 100 and is configured to receive user operations. It can be understood that in other examples, the touch layer 132 can have other structures.

Furthermore, referring to FIG. 10, the fingerprint recognition module 150 includes multiple sensing units 151 distributed in array. The fingerprint recognition module 150 further includes a collimating mirror 152. The collimating mirror 152 is disposed between the sensing units 151 and the display screen 130. The collimating mirror 152 is configured to allow light perpendicular to a light incident surface of the collimating mirror 152 and light that offsets from the light perpendicular to the light incident surface by a preset angle range to pass through. The preset angle range may be, but is not limited to, 5°. The collimating mirror 152 can make the light that offsets from the light perpendicular to the light incident surface by the preset angle range pass through. Therefore, the collimating mirror 152 can expand a concentrating range, so that clarity of the fingerprint image collected can be improved since more light can enter the sensing units 151. Generally, the collimating mirror 152 has a thickness of 0.3 to 0.5 mm and a diameter of 15 to 30 mm.

Furthermore, the fingerprint recognition module 150 further includes an infrared film 153. The infrared film 153 is disposed between the collimating mirror 152 and the sensing units 151. The infrared film 153 is configured to shield infrared waves to reduce interference of the infrared waves and improve accuracy of fingerprint recognition. Specifically, the infrared film 153 shields infrared waves and transmits visible light to improve the accuracy of the fingerprint recognition of the electronic device 100 in an environment where infrared waves are present (such as outdoors).

The following describes the process of fingerprint collection in detail. When the display screen 130 is touched by the finger of the user, the light emitting units 110 emit light, and the light emitted by the light emitting units 110 is illuminated on the surface of the finger of the user and is reflected back to the sensing units 151. There are ridges and valleys in the fingerprint of the finger of the user, and the ridges and the valleys of the fingerprint of the user have different reflection intensity to the light. Therefore, strengths of the signals sensed by the sensing units 151 are different. According to the signals sensed by the sensing units 151, the fingerprint image of the user can be simulated. Generally, since there is sweat, grease, and the like in the valleys of the fingerprint of the user, the light irradiated into the valleys of the fingerprint is absorbed. As such, light reflected from the valleys of the finger of the user is weaker than light reflected from the ridges of the finger of the user. Therefore, according to the position of each sensing unit 151 in the fingerprint recognition module 150 and the intensity of the light sensed by each sensing unit 151, the fingerprint image of the user can be simulated.

Furthermore, the fingerprint recognition module 150 includes sensing units 151 distributed in array. The sensing units 151 are disposed on a surface of a color film substrate 136 away from a thin film transistor array substrate 134. Furthermore, the sensing units 151 are disposed in an area corresponding to a black matrix 1361 in the color film substrate 136 to ensure that the display screen 130 has a high light transmittance. The sensing units 151 are disposed in the area corresponding to the black matrix 1361 in the color film substrate 136 as follows. The orthographic projection of the sensing units 151 at the color film substrate 136 at least partially falls within a range of the orthographic projection of the black matrix 1361 at the color film substrate 136.

Furthermore, the fingerprint recognition module 150 further includes a collimating mirror 152. The collimating mirror 152 is disposed between the sensing units 151 and the cover plate 133. The collimating mirror 152 is configured to expand a concentrating range so that more light can enter the sensing units 151 to improve definition of the fingerprint image collected.

Furthermore, the fingerprint recognition module 150 further includes an infrared film 153. The infrared film 153 is disposed between the collimating mirror 152 and the sensing units 151. The infrared film 153 is configured to shield infrared waves to reduce interference of infrared waves and improve accuracy of fingerprint recognition.

The following describes the process of fingerprint collection in detail. When the display screen 130 is touched by the finger of the user, pixel electrodes on the thin film transistor array substrate 134 and common electrodes on the color film substrate 136 cooperate to control deflection of liquid crystal molecules in the liquid crystal layer 135. The liquid crystal molecules emit light through a backlight module of the electronic device 100, to illuminate on the surface of the finger of the user, and then the light is reflected back to the sensing units 151. There are ridges and valleys in the fingerprint of the finger of the user, and the ridges and the valleys of the fingerprint of the user have different reflection intensity to the light. Therefore, strengths of the signals sensed by the sensing units 151 are different. According to the signals sensed by the sensing units 151, the fingerprint image of the user can be simulated. Generally, since there is sweat, grease, and the like in the valleys of the fingerprint of the user, the light irradiated into the valleys of the fingerprint is absorbed. As such, light reflected from the valleys of the finger of the user is weaker than light reflected from the ridges of the finger of the user. Therefore, according to the position of each sensing unit 151 in the fingerprint recognition module 150 and the intensity of the light sensed by each sensing unit 151, the fingerprint image of the user can be obtained.

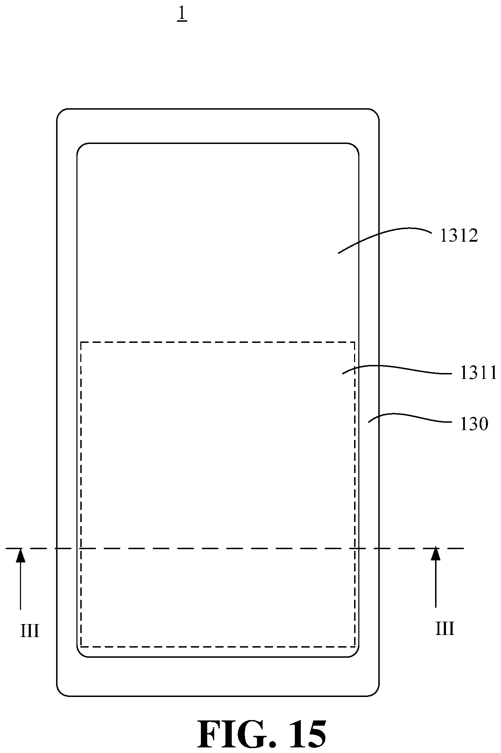

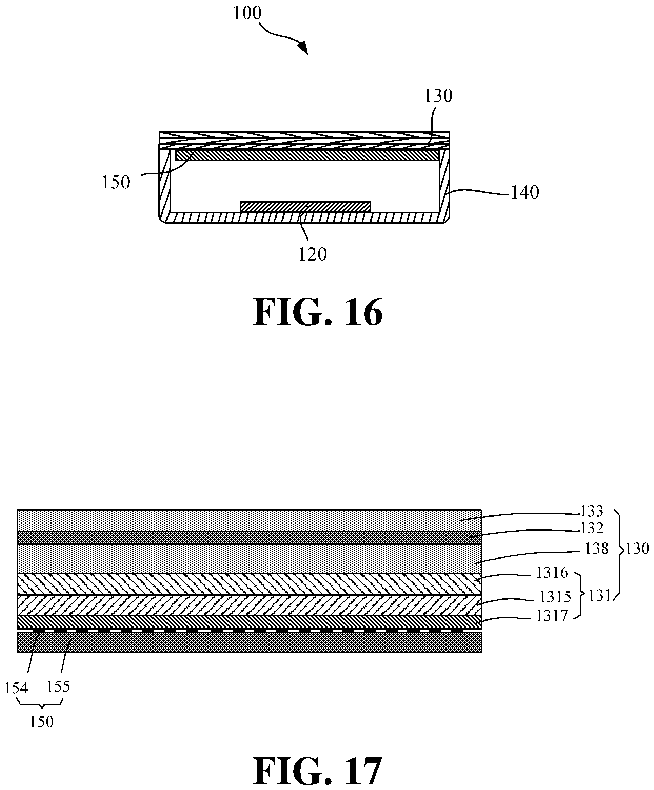

In the case where the fingerprint recognition module 150 includes an ultrasonic fingerprint recognition module, the working principle of the fingerprint recognition module 150 is described below. FIG. 15 is a schematic structural view of an electronic device according to a third implementation. FIG. 16 is a schematic structural view taken along line IV-IV of FIG. 15. FIG. 17 is a schematic structural view of the display screen and the fingerprint recognition module of FIG. 16. The electronic device 100 includes a display screen 130 and a fingerprint recognition module 150. The display screen 130 includes an OLED display layer 131, a touch layer 132, a cover plate 133, and an encapsulation layer 138. The encapsulation layer 138 is configured to encapsulate the OLED display layer 131. The cover plate 133 is stacked and spaced apart from the encapsulation layer 138. The touch layer 132 is disposed on a side of the cover plate 133 close to the encapsulation layer 138. The OLED display layer 131 includes a substrate 1315, a light emitting layer 1316, and a wiring layer 1317. The light emitting layer 1316 is disposed on the substrate 1315. The wiring layer 1317 is disposed on a side of the substrate 1315 away from the light emitting layer 1316. The fingerprint recognition module 150 includes multiple receiving portions 154. The multiple receiving portions 154 are disposed alternately on a side of the substrate 1315 away from the light emitting layer 1316. In this example, the multiple receiving portions 154 are disposed away from the substrate 1315 compared to the wiring layer 1317. A transmitting portion 155 is disposed on a side of the receiving portions 154 away from the substrate 1315. In a possible example, the transmitting portion 155 is made of a piezoelectric material. When the transmitting portion 155 receives a control signal transmitted from the wiring layer 1317, the transmitting portion 155 generates a piezoelectric effect and emits ultrasonic waves.

The following describes the process of fingerprint collection in detail. When the display screen 130 receives a touch operation from the finger of the user, the processor 121 of the electronic device 100 generates a control signal according to the touch operation. The control signal is transmitted to the transmitting portion 155 via the wiring layer 1317. The transmitting portion 155 generates ultrasonic waves according to the control signal. The ultrasonic waves are transmitted to the surface of the finger of the user and are reflected back to the receiving portions 154. Due to the presence of ridges and valleys in the fingerprint of the finger of the user and height differences between the ridges and the valleys, the ridges and the valleys of the finger of the user have different reflection intensity to the ultrasonic wave. Generally, since distances from the transmitting portion 155 to the ridges of the fingerprint are shorter than distances from the transmitting portion 155 to the valleys of the fingerprint, for the ultrasonic wave of the same intensity, the ultrasonic wave reflected from the valley of the fingerprint is weaker than the ultrasonic wave reflected from the ridge of the fingerprint. Thus, the fingerprint image of the user can be simulated based on the position of each of the receiving portions 154 in the fingerprint recognition module 150 and the intensity of the ultrasonic wave sensed by each of receiving portions 154. Furthermore, the electronic device 100 also has a display function. In an example, the display screen 130 is a liquid crystal display (LCD).

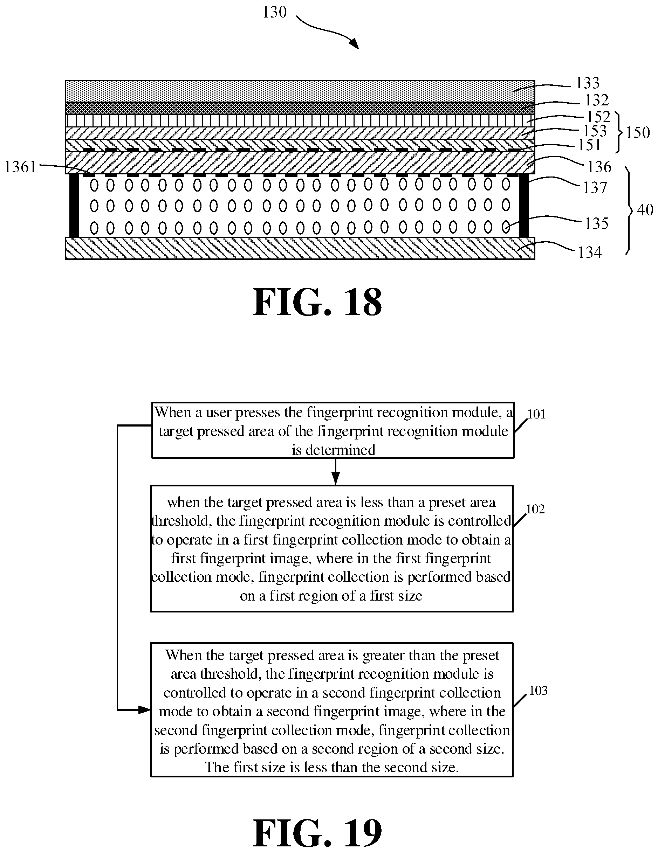

FIG. 18 is a schematic structural view of a display screen 130 according to implementations. In the case that the display screen 130 is a liquid crystal display, the display screen 130 includes a thin film transistor array substrate 134, a liquid crystal layer 135, a color film substrate 136, a touch layer 132, and a cover plate 133. The thin film transistor array substrate 134 is disposed opposite to and spaced apart from the color film substrate 136. The liquid crystal layer 135 is disposed between the thin film transistor array substrate 134 and the color film substrate 136. The display screen 130 further includes a sealing frame 137 between the thin film transistor array substrate 134 and the color film substrate 136. The sealing frame 137 is configured to form a seal for the liquid crystal layer 135. The thin film transistor array substrate 134, the liquid crystal layer 135, the color film substrate 136, and the sealing frame 137 constitute a display screen 40. The thin film transistor array substrate 134 is provided with thin film transistors distributed in array and pixel electrodes electrically connected to the thin film transistors. The color film substrate 136 is provided with common electrodes. The common electrodes cooperate with the pixel electrodes to control deflection of liquid crystal molecules in the liquid crystal layer 135. The thin film transistor array substrate 134, the liquid crystal layer 135, and the color film substrate 136 realize the display function of the electronic device 100. The cover plate 133 is disposed on a side of the color film substrate 136 away from the thin film transistor array substrate 134. A surface of the cover plate 133 away from the color film substrate 136 constitutes the design surface of the electronic device 100 and is configured to receive user operations. In this example, the touch layer 132 is disposed on a surface of the cover plate 133 close to the color film substrate 136. The touch layer 132 implements a touch function of the electronic device 100. In other examples, the touch layer 132 can also be disposed on the thin film transistor array substrate 134 or the color film substrate 136.

Although various forms of the display screen 130 and the fingerprint recognition module 150 are described above, the present disclosure is not limited to any specific form, as long as the display screen 130 can have the fingerprint recognition region 1311 and the fingerprint recognition region 1311 can be simultaneously pressed by at least two fingers.

The following functions can be realized based on the electronic device 100 of FIG. 1.

The display screen 130 is configured to determine a target pressed area of the fingerprint recognition module 150 when the user presses the fingerprint recognition module 150.

The processing circuit is configured to control the fingerprint recognition module 150 to operate in a first fingerprint collection mode to obtain a first fingerprint image, when the target pressed area is less than a preset area threshold. In the first fingerprint collection mode, fingerprint collection is performed based on a first region of a first size.

The processing circuit is configured to control the fingerprint recognition module 150 to operate in a second fingerprint collection mode to obtain a second fingerprint image, when the target pressed area is greater than the preset area threshold. In the second fingerprint collection mode, fingerprint collection is performed based on a second region of a second size, and the first size is less than the second size.

In an implementation, in terms of determining the target pressed area of the fingerprint recognition module 150, the display screen 130 is configured to determine a first pressed area of the display screen 130 when the user presses the display screen 130, and to assign part of the first pressed area which falls within the fingerprint recognition region as the target pressed area.

In an implementation, in terms of performing fingerprint collection based on the first region of the first size, the fingerprint recognition module 150 is configured to: determine a pressed region of the fingerprint recognition module 150 where the user pressed; select at least one sampling point in the pressed region; obtain at least one first region, where each of the at least one first region has the first size and is centered at a corresponding one of the at least one sampling point; and perform fingerprint collection in the at least one first region.

In an implementation, in terms of performing fingerprint collection in the at least one first region, the fingerprint recognition module 150 is configured to perform fingerprint collection to obtain a fingerprint image, and perform image matting on the fingerprint image with respect to the at least one first region to obtain the first fingerprint image.

In an implementation, after operating in the first fingerprint collection mode based on the first region of the first size to obtain the first fingerprint image, the processing circuit is further configured to: determine a target fingerprint template corresponding to the first fingerprint collection mode according to a mapping relationship between fingerprint collection modes and fingerprint templates; compare the first fingerprint image with the target fingerprint template; and unlock the electronic device when a matching rate between the first fingerprint image and the target fingerprint template is within a preset range.

In an implementation, in terms of comparing the first fingerprint image with the target fingerprint template, the processing circuit is configured to: perform minutiae extraction on the first fingerprint image to obtain a first minutiae set; perform minutiae extraction on the target fingerprint template to obtain a second minutiae set; determine a target minutiae density of the first fingerprint image according to the first minutiae set and the target pressed area; determine the preset range corresponding to the target minutiae density according to a mapping relationship between minutiae densities and fingerprint recognition threshold ranges; determine a matching rate between the first minutiae set and the second minutiae set; and determine whether the matching rate is in the preset range corresponding to the target minutiae density.

FIG. 19 is a schematic flow chart of a method for fingerprint recognition according to an implementation. As illustrated in FIG. 19, the method is applicable to the electronic device 100 of FIG. 1. The electronic device 100 includes the fingerprint recognition module 150 and the display screen 130 which has the fingerprint recognition region. The method includes the following.

At block 101, when a user presses the fingerprint recognition module 150, a target pressed area of the fingerprint recognition module 150 is determined.

In implementations of the disclosure, the electronic device 100 includes the fingerprint recognition module 150 and the display screen 130. The fingerprint recognition module 150 can be integrated below the display screen 130. Alternatively, the fingerprint recognition module 150 can be integrated in the display screen 130. The display screen 130 can be a full screen or a notch screen. When the user presses the fingerprint recognition module 150, the target pressed area of the fingerprint recognition module 150 is determined. As an example, the display screen 130 may be integrated with a touch sensor. The touch sensor may be a pressure sensor or an ultrasonic sensor, which is not limited herein. As such, the target pressed area of the fingerprint recognition module 150 can be obtained through the touch sensor.

In an implementation, at block 101, the target pressed area of the fingerprint recognition module 150 is determined as follows.

At block 11, a first pressed area of the display screen is determined when the user presses the display screen.

At block 12, part of the first pressed area which falls within the fingerprint recognition region is assigned as the target pressed area.

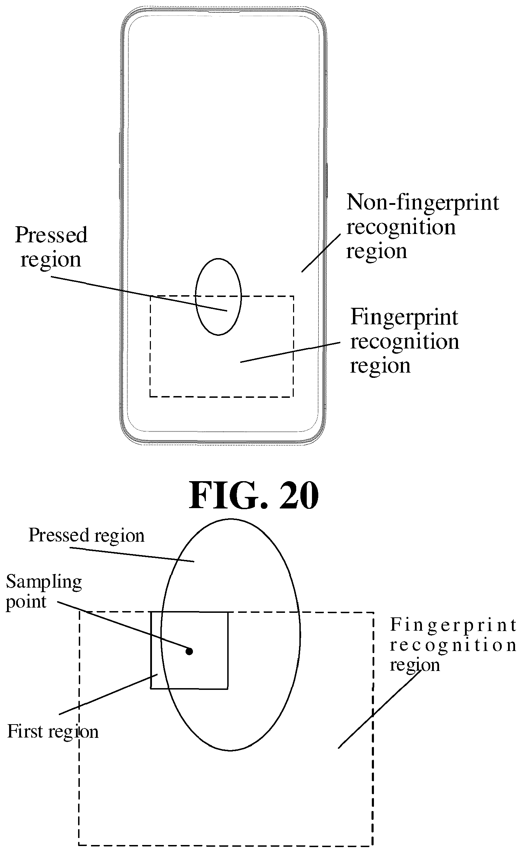

In this implementation, the electronic device 100 can detect an entire pressed area (that is, the first pressed area) when the user presses the display screen 130. When the user presses the display screen 130, part of a region pressed by the user falls within the fingerprint recognition region of the fingerprint recognition module 150, as illustrated in FIG. 20. Therefore, the part of the first pressed area which falls within the fingerprint recognition module 150 is assigned as the target pressed area.

At block 102, when the target pressed area is less than a preset area threshold, the fingerprint recognition module 150 is controlled to operate in a first fingerprint collection mode to obtain a first fingerprint image, where in the first fingerprint collection mode, fingerprint collection is performed based on a first region of a first size.

As an example, the above-identified preset area threshold can be set by the user or set by the operating system 112 by default. The first fingerprint collection mode can be understood as a fingerprint collection mode for a finger with small size. For example, when a child touches the display screen 130 for fingerprint recognition, touch by the finger of the child can be detected by the fingerprint recognition module 150.

In an implementation, at block 102, fingerprint collection is performed based on the first region of the first size as follows.

At block 21, a pressed region of the fingerprint recognition module, where the user pressed, is determined.

At block 22, at least one sampling point is selected in the pressed region.

At block 23, at least one first region is obtained, where each of the at least one first region has the first size and is centered at a corresponding one of the at least one sampling point.

At block 24, fingerprint collection is performed in the at least one first region.

Referring to FIG. 20, the electronic device 100 can determine the pressed region of the fingerprint recognition module 150, that is, an intersection region between the fingerprint recognition region of the fingerprint recognition module 150 and a region of the display screen 130 which is pressed by the user. The above-identified sampling point can be any point in the pressed region. As illustrated in FIG. 21, as an example, one sampling point is illustrated, and the first region is centered at the at least one sampling point. The first region can be in a square, triangular, or circular shape, which is not limited herein. As such, an image collected in the first region by the fingerprint recognition module 150 can be used as the first fingerprint image.

In an implementation, at block 24, fingerprint collection is performed in the at least one first region as follows.

At block 241, the fingerprint recognition module 150 is controlled to perform fingerprint collection to obtain a fingerprint image.

At block 242, image matting is performed on the fingerprint image with respect to the at least one first region to obtain the first fingerprint image.

As an example, the electronic device 100 can control the fingerprint recognition module 150 to perform fingerprint collection to obtain the fingerprint image. Matting processing is then performed on the fingerprint image based on at least one first region to obtain the first fingerprint image.

In an implementation, at block 24, fingerprint collection is performed in the at least one first region as follows.

The fingerprint recognition module 150 is controlled to perform fingerprint collection in the at least one first region to obtain the first fingerprint image.

In an implementation, the electronic device 100 is capable of controlling the fingerprint recognition module 150 to perform fingerprint collection only in the at least one first region to obtain the first fingerprint image.

At block 103, when the target pressed area is greater than the preset area threshold, the fingerprint recognition module is controlled to operate in a second fingerprint collection mode to obtain a second fingerprint image, where in the second fingerprint collection mode, fingerprint collection is performed based on a second region of a second size. The first size is less than the second size.

Compared with the first fingerprint collection mode, the second fingerprint collection mode can be understood as a fingerprint collection mode for a finger with normal size. As an example, when the target pressed area is greater than the preset area threshold, the electronic device 100 controls the fingerprint recognition module 150 to operate in the second fingerprint collection mode to obtain the second fingerprint image, where in the second fingerprint collection mode, fingerprint collection is performed based on the second region of the second size. The first size is less than the second size. As such, different fingerprint images can be obtained in different fingerprint collection modes. On the one hand, it is beneficial to realizing rapid fingerprint recognition, and on the other hand, it is also helpful to improve the efficiency of fingerprint recognition.

In an implementation, at block 102, after fingerprint collection is performed based on the first region of the first size to obtain the first fingerprint image, the following can be further performed.

At block A1, a target fingerprint template corresponding to the first fingerprint collection mode is determined according to a mapping relationship between fingerprint collection modes and fingerprint templates.

At block A2, the first fingerprint image is compared with the target fingerprint template.

At block A3, the electronic device 100 is unlocked when a matching rate between the first fingerprint image and the target fingerprint template is within a preset range.

In an implementation, the above-identified preset range can be set by the user or by the operating system 112 by default. The mapping relationship between the fingerprint collection modes and the fingerprint templates can be pre-stored in the electronic device 100. Different fingerprint collection modes correspond to different fingerprint templates. Further, the target fingerprint template corresponding to the first fingerprint collection mode can be determined according to the mapping relationship, and the first fingerprint image is compared with the target fingerprint template to obtain the matching rate. When the matching rate is within the preset range, the electronic device 100 is unlocked.

In an implementation, at block A2, the first fingerprint image is compared with the target fingerprint template as follows.

At A21, minutiae extraction (also known as feature point extraction) is performed on the first fingerprint image to obtain a first minutiae set (as known as a set of first feature points).

At A22, minutiae extraction is performed on the target fingerprint template to obtain a second minutiae set (as known as a set of second feature points).

At A23, a target minutiae density (also known as target minutiae point density) of the first fingerprint image is determined according to the first minutiae set and the target pressed area.

At A24, the preset range corresponding to the target minutiae density is determined according to a mapping relationship between minutiae densities and fingerprint recognition threshold ranges.

At A25, a matching rate between the first minutiae set and the second minutiae set is determined.

At A26, whether the matching rate is in the preset range corresponding to the target minutiae density is determined.

In an implementation, the electronic device can perform minutiae extraction on the first fingerprint image to obtain the first minutiae set. The first minutiae set can include multiple minutiae. Minutiae extraction can be performed thought Harris corner detection algorithm, scale invariant feature transform (SIFT) algorithm, speeded up robust features (SURF) algorithm, and the like, which is not limited herein. Similarly, the electronic device 100 can perform minutiae extraction on the target fingerprint template to obtain the second minutiae set. The second minutiae set can also include multiple minutiae. The target minutiae density of the first fingerprint image can be determined according to the first minutiae set and the target pressed area. The target minutiae density is equal to a ratio of the total number of minutiae in the first minutiae set to the target pressed area. In an implementation, the mapping relationship between the minutiae densities and the fingerprint recognition threshold ranges is pre-stored in the electronic device 100. The preset range corresponding to the target minutiae density is then determined according to the mapping relationship. The matching rate between the first minutiae set and the second minutiae set as well as whether the matching rate is in the preset range corresponding to the target minutiae density are determined. When the matching rate is in the preset range, the electronic device 100 is unlocked. Otherwise, unlock failure of the electronic device 100 is prompted to the user.

For example, although the entire fingerprint recognition module 150 is capable of performing fingerprint collection, only part of the fingerprint recognition module which is pressed by the user can collect a valid fingerprint image. Therefore, in most cases, since an image collected by the fingerprint recognition module 150 includes not only a fingerprint ridge image (that is, an image obtained by part of the fingerprint recognition module 150 that is pressed by the user), but also a background image (that is, an image obtained by part of the fingerprint recognition module 150 that is not pressed by the user), image matting can be performed on the whole fingerprint image to sketched out the effective part, that is, the fingerprint ridge image. For a small finger that touches the fingerprint recognition module 150, in the fingerprint image obtained by the entire fingerprint recognition module 150, the background image occupies majority of the fingerprint image and the fingerprint ridge image occupies only a small part of the fingerprint image. In this case, when the fingerprint image collected by the entire fingerprint recognition module 150 is used as a fingerprint template or for fingerprint recognition, it will result in a large error in fingerprint recognition due to a small valid portion of the fingerprint image. Thus, in the present disclosure, a pressed area pressed by a finger is first calculated according to a variation (for example, a variation of a pressure value of a pressure sensor) in a touch panel of the electronic device 100, and then is compared with a preset range. As an example, when the pressed area pressed by the finger is less than 50 mm², it indicates that the finger is a small finger, and fingerprint enrollment is performed in a mode corresponding to a small finger (for example, the fingerprint of the small finger is enrolled based on the first region of 6*6 mm²). During fingerprint template enrollment, the finger can be determined as a small finger if the pressed area pressed by the finger is less than 50 mm² in each of five fingerprint-collection. As such, fingerprint enrollment and fingerprint recognition are switched to the mode corresponding to the small finger (that is, the first fingerprint collection mode).

The method for fingerprint recognition provided herein is applicable to the electronic device 100. The electronic device 100 includes the fingerprint recognition module 150. The target pressed area of the fingerprint recognition module 150 is determined when the user presses the fingerprint recognition module 150. When the target pressed area is less than the preset area threshold, the fingerprint recognition module 150 is controlled to operate in the first fingerprint collection mode to obtain the first fingerprint image, where in the first fingerprint collection mode, fingerprint collection is performed based on the first region of the first size. When the target pressed area is greater than the preset area threshold, the fingerprint recognition module 150 is controlled to operate in the second fingerprint collection mode to obtain the second fingerprint image, where in the second fingerprint collection mode, fingerprint collection is performed based on the second region of the second size, and the first size is less than the second size. As such, although different users have fingers of different sizes, a corresponding fingerprint collection mode can be selected according to the size of the finger and the efficiency of fingerprint enrollment is improved.

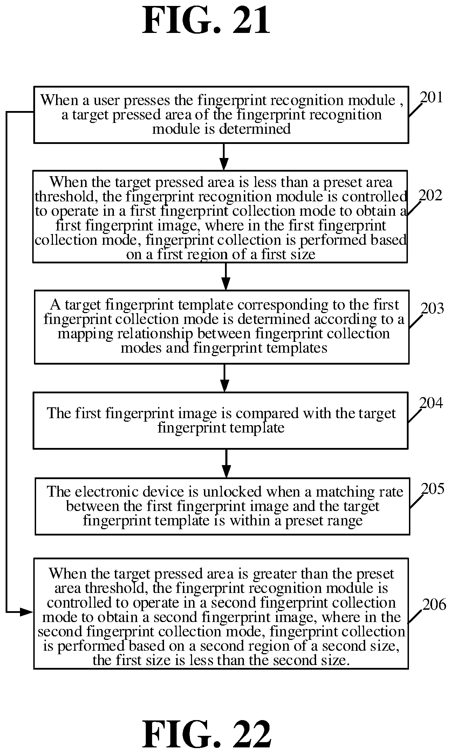

FIG. 22 is a schematic flow chart of a method for fingerprint recognition according to an implementation. Referring to FIG. 22, the method is applicable to the electronic device 100. The electronic device 100 includes the fingerprint recognition module 150 and the display screen 130 which has the fingerprint recognition region. The method includes the following.

At block 201, when a user presses the fingerprint recognition module 150, a target pressed area of the fingerprint recognition module 150 is determined.

At block 202, when the target pressed area is less than a preset area threshold, the fingerprint recognition module 150 is controlled to operate in a first fingerprint collection mode to obtain a first fingerprint image, where in the first fingerprint collection mode, fingerprint collection is performed based on a first region of a first size.

At block 203, a target fingerprint template corresponding to the first fingerprint collection mode is determined according to a mapping relationship between fingerprint collection modes and fingerprint templates.

At block 204, the first fingerprint image is compared with the target fingerprint template.

At block 205, the electronic device is unlocked when a matching rate between the first fingerprint image and the target fingerprint template is within a preset range.

At block 206, when the target pressed area is greater than the preset area threshold, the fingerprint recognition module is controlled to operate in a second fingerprint collection mode to obtain a second fingerprint image, where in the second fingerprint collection mode, fingerprint collection is performed based on a second region of a second size. The first size is less than the second size.

For details of operations carried out at blocks 201 to 206, reference can be made to steps in the method for fingerprint recognition illustrated in FIG. 19, which will not be repeated herein.

The method for fingerprint recognition provided herein is applicable to the electronic device 100. The electronic device 100 includes the fingerprint recognition module 150. The target pressed area of the fingerprint recognition module 150 is determined when the user presses the fingerprint recognition module 150. When the target pressed area is less than the preset area threshold, the fingerprint recognition module 150 is controlled to operate in the first fingerprint collection mode to obtain the first fingerprint image, where in the first fingerprint collection mode, fingerprint collection is performed based on the first region of the first size. The target fingerprint template corresponding to the first fingerprint collection mode is determined according to the mapping relationship between fingerprint collection modes and fingerprint templates. The first fingerprint image is compared with the target fingerprint template. The electronic device is unlocked when a matching rate between the first fingerprint image and the target fingerprint template is within a preset range. When the target pressed area is greater than the preset area threshold, the fingerprint recognition module 150 is controlled to operate in the second fingerprint collection mode to obtain the second fingerprint image, where in the second fingerprint collection mode, fingerprint collection is performed based on the second region of the second size, and the first size is less than the second size. As such, although different users have fingers of different sizes, a corresponding fingerprint collection mode can be selected according to the size of the finger in such a way that the efficiency of fingerprint enrollment is improved.

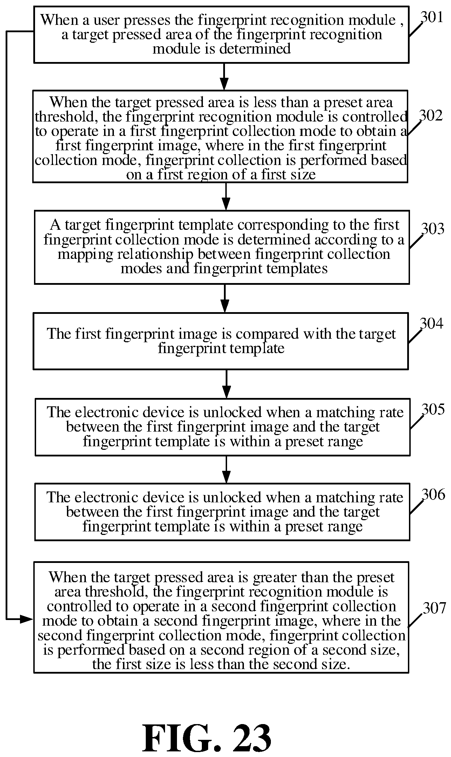

FIG. 23 is a schematic flow chart of a method for fingerprint recognition according to another implementation. Referring to FIG. 23, the method is applicable to the electronic device 100. The electronic device 100 includes the fingerprint recognition module 150 and the display screen 130 which has the fingerprint recognition region. The method includes the following.

At block 301, a first pressed area of the display screen is determined when the user presses the display screen.

At block 302, part of the first pressed area which falls within the fingerprint recognition region is assigned as the target pressed area.

At block 303, when the target pressed area is less than a preset area threshold, the fingerprint recognition module is controlled to operate in a first fingerprint collection mode, a pressed region of the fingerprint recognition module, where the user pressed, is determined.

At block 304, at least one sampling point is selected in the pressed region.

At block 305, at least one first region is obtained, where each of the at least one first region has the first size and is centered at a corresponding one of the at least one sampling point.

At block 306, fingerprint collection is performed in the at least one first region to obtain a first fingerprint image.

At block 307, the fingerprint recognition module is controlled to operate in a second fingerprint collection mode to obtain a second fingerprint image, when the target pressed area is greater than the preset area threshold, where in the second fingerprint collection mode, fingerprint collection is performed based on a second region of a second size, and the first size is less than the second size.

For details of operations carried out at blocks 301 to 307, reference can be made to steps in the method for fingerprint recognition illustrated in FIG. 19, which will not be repeated herein.

The method for fingerprint recognition provided herein is applicable to the electronic device 100. The electronic device 100 includes the fingerprint recognition module 150. When the user presses the fingerprint recognition module 150, the target pressed area of the fingerprint recognition module 150 is determined. When the target pressed area is less than the preset area threshold, the fingerprint recognition module is controlled to operate in the first fingerprint collection mode, the pressed region of the fingerprint recognition module, where the user pressed, is determined. The at least one sampling point is selected in the pressed region. The at least one first region is obtained, where each of the at least one first region has the first size and is centered at a corresponding one of the at least one sampling point. Fingerprint collection is performed in the at least one first region to obtain a first fingerprint image. When the target pressed area is greater than the preset area threshold, the fingerprint recognition module is controlled to operate in the second fingerprint collection mode to obtain the second fingerprint image, where in the second fingerprint collection mode, fingerprint collection is performed based on the second region of the second size, and the first size is less than the second size. As such, although different users have fingers of different sizes, a corresponding fingerprint collection mode can be selected according to the size of the finger in such a way that the efficiency of fingerprint enrollment is improved.

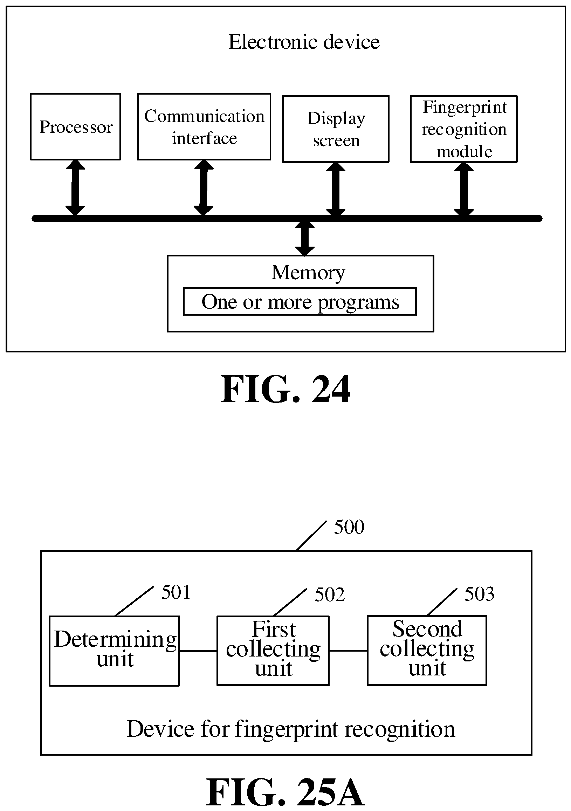

Based on the aforementioned implementations, FIG. 24 is a schematic structural diagram of the electronic device 100 according to an implementation. As illustrated in FIG. 24, the electronic device 100 includes a processor, a memory, and one or more programs stored in the memory and executed by the processor. The electronic device 100 includes the fingerprint recognition module 150 and the display screen 130 which has the fingerprint recognition region. The one or more programs includes instructions for performing the following.

When a user presses the fingerprint recognition module 150, a target pressed area of the fingerprint recognition module 150 is determined.

When the target pressed area is less than a preset area threshold, the fingerprint recognition module 150 is controlled to operate in a first fingerprint collection mode to obtain a first fingerprint image, where in the first fingerprint collection mode, fingerprint collection is performed based on a first region of a first size.

When the target pressed area is greater than the preset area threshold, the fingerprint recognition module is controlled to operate in a second fingerprint collection mode to obtain a second fingerprint image, where in the second fingerprint collection mode, fingerprint collection is performed based on a second region of a second size. The first size is less than the second size.

The electronic device 100 provided in disclosure includes the fingerprint recognition module 150. When the user presses the fingerprint recognition module 150, the target pressed area of the fingerprint recognition module 150 is determined. When the target pressed area is less than the preset area threshold, the fingerprint recognition module 150 is controlled to operate in the first fingerprint collection mode to obtain the first fingerprint image, where in the first fingerprint collection mode, fingerprint collection is performed based on the first region of the first size. When the target pressed area is greater than the preset area threshold, the fingerprint recognition module is controlled to operate in the second fingerprint collection mode to obtain the second fingerprint image, where in the second fingerprint collection mode, fingerprint collection is performed based on the second region of the second size. The first size is less than the second size. As such, although different users have fingers of different sizes, a corresponding fingerprint collection mode can be selected according to the size of the finger in such a way that the efficiency of fingerprint enrollment is improved.

In an implementation, in terms of determining the target pressed area of the fingerprint recognition module 150, the one or more programs include instructions for performing the following operations. A first pressed area of the display screen 130 is determined when the user presses the display screen 130. Part of the first pressed area which falls within the fingerprint recognition region is assigned as the target pressed area.

In an implementation, in terms of performing fingerprint collection based on the first region of the first size, the one or more programs include instructions for performing the following operations.

A pressed region of the fingerprint recognition module 150, where the user pressed, is determined. At least one sampling point is selected in the pressed region. At least one first region is obtained, where each of the at least one first region has the first size and is centered at a corresponding one of the at least one sampling point. Fingerprint collection is performed in the at least one first region.

In an implementation, in terms of performing fingerprint collection in the at least one first region to obtain the first fingerprint image, the one or more programs include instructions for performing the following operations. The fingerprint recognition module 150 is controlled to perform fingerprint collection to obtain a fingerprint image. Image matting is performed on the fingerprint image with respect to the at least one first region to obtain the first fingerprint image.

In an implementation, the one or more programs further include instructions for performing the following operations, after the first fingerprint image is obtained in the first fingerprint collection mode based on the first region of the first size.

A target fingerprint template corresponding to the first fingerprint collection mode is determined according to a mapping relationship between fingerprint collection modes and fingerprint templates.

The first fingerprint image is compared with the target fingerprint template.

The electronic device is unlocked when a matching rate between the first fingerprint image and the target fingerprint template is within a preset range.

In an implementation, in terms of comparing the first fingerprint image with the target fingerprint template, the one or more programs include instructions for performing the following operations. Minutiae extraction is performed on the first fingerprint image to obtain a first minutiae set. Minutiae extraction is performed on the target fingerprint template to obtain a second minutiae set. A target minutiae density of the first fingerprint image is determined according to the first minutiae set and the target pressed area. The preset range corresponding to the target minutiae density is determined according to a mapping relationship between minutiae densities and fingerprint recognition threshold ranges. A matching rate between the first minutiae set and the second minutiae set as well as whether the matching rate is in the preset range corresponding to the target minutiae density are determined.

The foregoing solution of the implementations of the disclosure is mainly described from the viewpoint of execution process of the method. It can be understood that, in order to implement the above functions, the mobile terminal includes hardware structures and/or software modules corresponding to the respective functions. Those skilled in the art should readily recognize that, in combination with the example units and scheme steps provided in the implementations disclosed herein, the present disclosure can be implemented in hardware or a combination of the hardware and computer software. Whether a function is implemented by way of the hardware or hardware driven by the computer software depends on the particular application and design constraints of the technical solution. Those skilled in the art may use different methods to implement the described functions for each particular application, but such implementation should not be considered as beyond the scope of the present disclosure.

According to the implementations of the disclosure, functional units may be divided for the mobile terminal in accordance with the foregoing method examples. For example, each functional unit may be divided according to each function, and two or more functions may be integrated in one processing unit. The above-mentioned integrated unit can be implemented in the form of hardware or software functional units. It should be noted that the division of units in the implementations of the present disclosure is schematic, and is merely a logical function division, and there may be other division manners in actual implementation.

FIG. 25A is a block diagram of functional units of a device 500 for fingerprint recognition according to an implementation. The device 500 for fingerprint recognition is applicable to the electronic device 100. The electronic device 100 includes a fingerprint recognition module 150 and a display screen 130 which has a fingerprint recognition region. The device 500 includes a determining unit 501, a first collecting unit 502, and a second collecting unit 503. The determining unit 501 is configured to determine a target pressed area of the fingerprint recognition module when a user presses the fingerprint recognition module. The first collecting unit 502 is configured to control the fingerprint recognition module to operate in a first fingerprint collection mode to obtain a first fingerprint image, when the target pressed area is less than a preset area threshold, where in the first fingerprint collection mode, fingerprint collection is performed based on a first region of a first size. The second collecting unit 503 is configured to control the fingerprint recognition module to operate in a second fingerprint collection mode to obtain a second fingerprint image, when the target pressed area is greater than the preset area threshold, where in the second fingerprint collection mode, fingerprint collection is performed based on a second region of a second size, and the first size is less than the second size.

The device 500 for fingerprint recognition provided in disclosure is applicable to the electronic device 100. The electronic device 100 includes the fingerprint recognition module 150. The target pressed area of the fingerprint recognition module is determined when the user presses the fingerprint recognition module. The fingerprint recognition module 150 is controlled to operate in the first fingerprint collection mode to obtain the first fingerprint image, when the target pressed area is less than the preset area threshold, where in the first fingerprint collection mode, fingerprint collection is performed based on the first region of the first size. The fingerprint recognition module 150 is controlled to operate in the second fingerprint collection mode to obtain the second fingerprint image, when the target pressed area is greater than the preset area threshold, where in the second fingerprint collection mode, fingerprint collection is performed based on the second region of the second size. The first size is less than the second size. As such, although different users have fingers of different sizes, a corresponding fingerprint collection mode can be selected according to the size of the finger in such a way that the efficiency of fingerprint enrollment is improved.

In an implementation, in terms of determining the target pressed area of the fingerprint recognition module 150, the determining unit 501 is configured to determine a first pressed area of the display screen 130 when the user presses the display screen 130, and to assign part of the first pressed area which falls within the fingerprint recognition region as the target pressed area.

In an implementation, in terms of performing fingerprint collection based on the first region of the first size, the first collecting unit 502 is configured to operate as follows. The first collecting unit 502 is configured to: determine a pressed region of the fingerprint recognition module 150 where the user pressed; select at least one sampling point in the pressed region; obtain at least one first region, where each of the at least one first region has the first size and is centered at a corresponding one of the at least one sampling point; and perform fingerprint collection in the at least one first region.

In an implementation, in terms of performing fingerprint collection in the at least one first region, the first collecting unit 502 is configured to control the fingerprint recognition module 150 to perform fingerprint collection to obtain a fingerprint image, and perform image matting on the fingerprint image with respect to the at least one first region to obtain the first fingerprint image.

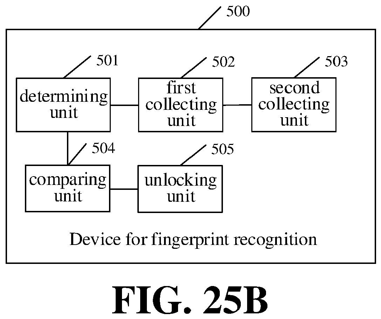

In an implementation, FIG. 25B illustrates a variation of the device 500 for fingerprint recognition of FIG. 25A. The device 500 of FIG. 25B further includes a comparing unit 504 and an unlocking unit 505. The determining unit 501 is further configured to determine a target fingerprint template corresponding to the first fingerprint collection mode according to a mapping relationship between fingerprint collection modes and fingerprint templates, after the first collecting unit 502 performs fingerprint collection based on the first region of the first size to obtain the first fingerprint image. The comparing unit 504 is configured to compare the first fingerprint image with the target fingerprint template. The unlocking unit 505 is configured to unlock the electronic device when a matching rate between the first fingerprint image and the target fingerprint template is within a preset range.

In an implementation, in terms of comparing the first fingerprint image with the target fingerprint template, the comparing circuit 504 is configured to: perform minutiae extraction on the first fingerprint image to obtain a first minutiae set; perform minutiae extraction on the target fingerprint template to obtain a second minutiae set; determine a target minutiae density of the first fingerprint image according to the first minutiae set and the target pressed area; determine the preset range corresponding to the target minutiae density according to a mapping relationship between minutiae densities and fingerprint recognition threshold ranges; determine a matching rate between the first minutiae set and the second minutiae set as well as whether the matching rate is in the preset range corresponding to the target minutiae density.

Implementations further provide a computer storage medium. The computer storage medium is configured to store computer programs for electronic data interchange (EDI) which, when executed, are operable with a computer to perform some or all operations of any one of the foregoing method implementations. The computer includes a terminal.

Implementations further provide a computer program product. The computer program product includes a non-transitory computer-readable storage medium that stores computer programs. The computer programs are operable with a computer to execute some or all operations of any one of the foregoing method implementations. The computer program product may be a software installation package. The computer includes a terminal.

It is to be noted that, for the sake of simplicity, the foregoing method implementations are described as a series of action combinations, however, it will be appreciated by those skilled in the art that the present disclosure is not limited by the sequence of actions described. According to implementations, certain steps or operations may be performed in other order or simultaneously. Besides, it will be appreciated by those skilled in the art that the implementations described in the specification are exemplary implementations and the actions and modules involved are not necessarily essential to the present disclosure.

In the above implementations, description of each implementation has its own emphasis. For details not described in one implementation, reference can be made to related part in other implementations.

It will be appreciated that the apparatuses disclosed in implementations herein may also be implemented in various other manners. For example, the above apparatus implementations are merely illustrative, e.g., the division of units is only a division of logical functions, and there may exist other manners of division in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device or unit, and may be electrical, or otherwise.

Separated units as illustrated may or may not be physically separated. Components or parts displayed as units may or may not be physical units, and may reside at one location or may be distributed to multiple networked units. Some or all of the units may be selectively adopted according to practical needs to achieve desired objectives of the disclosure.

Various functional units described in implementations herein may be integrated into one processing unit or may be present as a number of physically separated units, and two or more units may be integrated into one. The integrated unit may take the form of hardware or a software functional unit.

If the integrated units are implemented as software functional units and sold or used as standalone products, they may be stored in a computer readable storage medium. Based on such an understanding, the essential technical solution, or the portion that contributes to the prior art, or all or part of the technical solution of the disclosure may be embodied as software products. The computer software products can be stored in a storage medium and may include multiple instructions that, when executed, can cause a computing device, e.g., a personal computer, a server, a network device, etc, to execute some or all operations of the methods described in various implementations. The above storage medium may include various kinds of media that can store program codes, such as a universal serial bus (USB) flash disk, a read only memory (ROM), a random access memory (RAM), a mobile hard drive, a magnetic disk, or an optical disk.

It will be understood by those of ordinary skill in the art that all or part of the various methods of the implementations described above may be accomplished by means of a program to instruct associated hardware. The program may be stored in a computer-readable memory, which may include a flash memory, a ROM, a RAM, a magnetic disk, an optical disk, and so on.

The implementations of the present disclosure are introduced in detail in the foregoing, and specific examples are applied here to set forth the principle and the implementation of the present disclosure, and the foregoing illustration of the embodiments is only to help in understanding the method and the core idea of the present disclosure. Meanwhile, those of ordinarily skill in the art may make variations and modifications to the present disclosure in terms of the specific implementations and application scopes according to the ideas of the present disclosure. Therefore, the specification shall not be construed as limitations to the present disclosure.

## Claims

1. An electronic device, comprising:
a fingerprint recognition module;
a display screen having a fingerprint recognition region and configured to determine a target pressed area of the fingerprint recognition module when a user presses the fingerprint recognition module; and
a processing circuit coupled with the fingerprint recognition module and the display screen and configured to:
control the fingerprint recognition module to operate in a first fingerprint collection mode to obtain a first fingerprint image, when the target pressed area is less than a preset area threshold, wherein in the first fingerprint collection mode, fingerprint collection is performed based on a first region of a first size; and
control the fingerprint recognition module to operate in a second fingerprint collection mode to obtain a second fingerprint image, when the target pressed area is greater than the preset area threshold, wherein in the second fingerprint collection mode, fingerprint collection is performed based on a second region of a second size, and the first size is less than the second size.

2. The electronic device of claim 1, wherein the display screen configured to determine the target pressed area of the fingerprint recognition module is configured to:
determine a first pressed area of the display screen when the user presses the display screen; and
assign part of the first pressed area which falls within the fingerprint recognition region as the target pressed area.

3. The electronic device of claim 1 or 2, wherein the fingerprint recognition module configured to perform fingerprint collection based on the first region of the first size is configured to:
determine a pressed region of the fingerprint recognition module where the user pressed;
select at least one sampling point in the pressed region;
obtain at least one first region, wherein each of the at least one first region has the first size and is centered at a corresponding one of the at least one sampling point; and
perform fingerprint collection in the at least one first region.

4. The electronic device of claim 3, wherein the fingerprint recognition module configured to perform fingerprint collection in the at least one first region is configured to:
control the fingerprint recognition module to perform fingerprint collection to obtain a fingerprint image; and
perform image matting on the fingerprint image with respect to the at least one first region to obtain the first fingerprint image.

5. The electronic device of any of claims 1 to 4, wherein the processing circuit is further configured to:
determine a target fingerprint template corresponding to the first fingerprint collection mode according to a mapping relationship between fingerprint collection modes and fingerprint templates;
compare the first fingerprint image with the target fingerprint template; and
unlock the electronic device when a matching rate between the first fingerprint image and the target fingerprint template is within a preset range.

6. The electronic device of claim 5, wherein the processing circuit configured to compare the first fingerprint image with the target fingerprint template is configured to:
perform minutiae extraction on the first fingerprint image to obtain a first minutiae set;
perform minutiae extraction on the target fingerprint template to obtain a second minutiae set;
determine a target minutiae density of the first fingerprint image according to the first minutiae set and the target pressed area;
determine the preset range corresponding to the target minutiae density according to a mapping relationship between minutiae densities and fingerprint recognition threshold ranges;
determine a matching rate between the first minutiae set and the second minutiae set; and
determine whether the matching rate is in the preset range corresponding to the target minutiae density.

7. A method for fingerprint recognition, applicable to an electronic device comprising a fingerprint recognition module and a display screen which has a fingerprint recognition region, the method comprising:
determining a target pressed area of the fingerprint recognition module when a user presses the fingerprint recognition module; and
controlling the fingerprint recognition module to operate in a first fingerprint collection mode to obtain a first fingerprint image, when the target pressed area is less than a preset area threshold, wherein in the first fingerprint collection mode, fingerprint collection is performed based on a first region of a first size; and
controlling the fingerprint recognition module to operate in a second fingerprint collection mode to obtain a second fingerprint image, when the target pressed area is greater than the preset area threshold, wherein in the second fingerprint collection mode, fingerprint collection is performed based on a second region of a second size, and the first size is less than the second size.

8. The method of claim 7, wherein determining the target pressed area of the fingerprint recognition module comprises:
determining a first pressed area of the display screen when the user presses the display screen; and
assigning part of the first pressed area which falls within the fingerprint recognition region as the target pressed area.

9. The method of claim 7 or 8, wherein performing fingerprint collection based on the first region of the first size comprises:
determining a pressed region of the fingerprint recognition module where the user pressed;
selecting at least one sampling point in the pressed region;
obtaining at least one first region, wherein each of the at least one first region has the first size and is centered at a corresponding one of the at least one sampling point; and
performing fingerprint collection in the at least one first region.

10. The method of claim 9, wherein performing fingerprint collection in the at least one first region comprises:
controlling the fingerprint recognition module to perform fingerprint collection to obtain a fingerprint image; and
performing image matting on the fingerprint image with respect to the at least one first region to obtain the first fingerprint image.

11. The method of any of claims 7 to 10, further comprising:
after performing fingerprint collection based on the first region of the first size to obtain the first fingerprint image,
determining a target fingerprint template corresponding to the first fingerprint collection mode according to a mapping relationship between fingerprint collection modes and fingerprint templates;
comparing the first fingerprint image with the target fingerprint template; and
unlocking the electronic device when a matching rate between the first fingerprint image and the target fingerprint template is within a preset range.

12. The method of claim 11, wherein comparing the first fingerprint image with the target fingerprint template comprises:
performing minutiae extraction on the first fingerprint image to obtain a first minutiae set;
performing minutiae extraction on the target fingerprint template to obtain a second minutiae set;
determining a target minutiae density of the first fingerprint image according to the first minutiae set and the target pressed area;
determining the preset range corresponding to the target minutiae density according to a mapping relationship between minutiae densities and fingerprint recognition threshold ranges;
determining a matching rate between the first minutiae set and the second minutiae set; and
determining whether the matching rate is in the preset range corresponding to the target minutiae density.

13. A device for fingerprint recognition, applicable to an electronic device comprising a fingerprint recognition module and a display screen which has a fingerprint recognition region, the device comprising:
a determining unit, configured to determine a target pressed area of the fingerprint recognition module when a user presses the fingerprint recognition module;
a first collecting unit, configured to control the fingerprint recognition module to operate in a first fingerprint collection mode to obtain a first fingerprint image, when the target pressed area is less than a preset area threshold, wherein in the first fingerprint collection mode, fingerprint collection is performed based on a first region of a first size; and
a second collecting unit, configured to control the fingerprint recognition module to operate in a second fingerprint collection mode to obtain a second fingerprint image, when the target pressed area is greater than the preset area threshold, wherein in the second fingerprint collection mode, fingerprint collection is performed based on a second region of a second size, and the first size is less than the second size.

14. The device of claim 13, wherein the determining unit configured to determine the target pressed area of the fingerprint recognition module is configured to:
determine a first pressed area of the display screen when the user presses the display screen; and
assign part of the first pressed area which falls within the fingerprint recognition region as the target pressed area.

15. The device of claim 13 or 14, wherein the first collecting unit configured to perform fingerprint collection based on the first region of the first size is configured to:
determine a pressed region of the fingerprint recognition module where the user pressed;
select at least one sampling point in the pressed region;
obtain at least one first region, wherein each of the at least one first region has the first size and is centered at a corresponding one of the at least one sampling point; and
perform fingerprint collection in the at least one first region.

16. The device of any of claims 13 to 15, wherein
the determining unit is further configured to determine a target fingerprint template corresponding to the first fingerprint collection mode according to a mapping relationship between fingerprint collection modes and fingerprint templates, after the first collecting unit performs fingerprint collection based on the first region of the first size to obtain the first fingerprint image;
the device further comprises:
a comparing unit configured to compare the first fingerprint image with the target fingerprint template; and
an unlocking unit configured to unlock the electronic device when a matching rate between the first fingerprint image and the target fingerprint template is within a preset range.

17. The device of claim 16, wherein the comparing unit configured to compare the first fingerprint image with the target fingerprint template is configured to:
perform minutiae extraction on the first fingerprint image to obtain a first minutiae set;
perform minutiae extraction on the target fingerprint template to obtain a second minutiae set;
determine a target minutiae density of the first fingerprint image according to the first minutiae set and the target pressed area;
determine the preset range corresponding to the target minutiae density according to a mapping relationship between minutiae densities and fingerprint recognition threshold ranges;
determine a matching rate between the first minutiae set and the second minutiae set; and
determine whether the matching rate is in the preset range corresponding to the target minutiae density.

18. An electronic device, comprising a processor, a memory, and one or more programs stored in the memory and executed by the processor, wherein the one or more programs comprises instructions for performing the method of any of claims 7 to 12.

19. A computer-readable storage medium configured to store computer programs for electronic data interchange (EDI) which, when executed, are operable with a computer to perform the method of any of claims 7 to 12.

20. A computer program product, comprising a non-transitory computer-readable storage medium that stores computer programs, wherein the computer programs are operable with a computer to execute the method of any of claims 7 to 12.
